# EUROPÄISCHE PATENTANMELDUNG

(11) **EP 2 415 622 A1**
(43) Veröffentlichungstag der Anmeldung: **08.02.2012**
(21) Anmeldenummer: 11174111.2
(22) Anmeldetag: 15.07.2011
(51) Int. Cl.: B60G 21/055

(54) **Verfahren zur Herstellung eines Stabilisators mit Stabilisatorlager**

(30) Priorität: 02.08.2010 DE 102010033036
(71) Anmelder: Benteler Automobiltechnik GmbH, 33102 Paderborn (DE)
(72) Erfinder: Grundmeier, Georg, 58239 Schwerte (DE)
(74) Vertreter: Ksoll, Peter

(57) **Zusammenfassung**

Die vorliegende Erfindung betrifft ein Verfahren zur Herstellung eines Stabilisators (1) mit einem Stabilisatorlager S für Kraftfahrzeuge mit folgenden Verfahrensschritten:
- Bereitstellen zweier ausvulkanisierter Elastomer-Metall-Lagerhalbschalen (3)
- chemisches Vorbehandeln eines Stabilisatorlagerabschnittes (2) auf dem Stabilisator (1) durch Aufbringen eines Haftgrundes
- Einsetzen des Stabilisators (1) und der Lagerhalbschalen (3) in eine Fügevorrichtung
- Verkleben der Lagerhalbschalen (3) mit dem Stabilisatorlagerabschnitt (2),

## Beschreibung

Die vorliegende Erfindung betrifft ein Verfahren zur Herstellung eines Stabilisators mit einem Stabilisatorlager für Kraftfahrzeuge gemäß den Merkmalen im Oberbegriff des Patentanspruchs 1.

Stabilisatoren sind im Kraftfahrzeugbau verwendete Torsionsfederstäbe, die der Stabilisierung gegen Neigung und Verwindung der Karosserie bei Kurvenfahrt eines Kraftfahrzeugs dienen. Weiterhin dienen sie dem Radlastausgleich, beispielsweise in Kurvenfahrten oder aber bei Überfahren eines Hindernisses o. ä. Stabilisatoren erstrecken sich in der Regel über die gesamte Breite des Fahrzeugs und sind im Bereich der Vorderachse und im Bereich der Hinterachse an die Fahrzeugachsen gekoppelt.

Die Stabilisatoren müssen unterhalb der Kraftfahrzeugkarosserie an der Kraftfahrzeugkarosserie selbst gelagert werden. Damit Störeinflüsse sowie Schwingungen der ungefederten Radmassen nicht an die Karosserie weitergegeben werden. Damit dennoch eine gute Lagerung sichergestellt ist, sind Elastomerdrehstabschulterlager aus dem Stand der Technik bekannt. Diese Drehstabschulterlager sind meist als Hülsenlager ausgebildet und mit der Hülse selbst an die Kraftfahrzeugkarosserie gekoppelt.

Die Elastomerfeder in den Drehstabschulterlagen dient dabei zum einen der federnden Lagerung des Stabilisators bzw. des Stabilisatordrehstabs, zum anderen als Körperschallbrücke, um Schwingungen oder aber andere Störeinflüsse nur gefiltert bzw. gedämpft an die Kraftfahrzeugkarosserie zu übertragen.

An den Drehstablagern treten erhebliche Kräfte auf, die zum einen durch Rotationskräfte aufgrund der Torsion, zum anderen durch Translationskräfte aufgrund der Federungswirkung an die Lager weitergegeben werden.

Aus dem Stand der Technik bekannte Drohstabschulterlager müssen Anforderungen in Bezug auf die hohe zu erwartende Lebensdauer erfüllen, genauso wie die Anforderung der einfachen und wirtschaftlichen Produzierbarkeit. Beispielsweise ist aus der EP 1 048 861 B1 ein solches Drehstabschulterlager sowie dessen Herstellungsverfahren bekannt.

Aufgabe der vorliegenden Erfindung ist es daher, ein Verfahren aufzuzeigen, mit dem es möglich ist, langlebige Drehstabschulterlager herzustellen, das gegenüber aus dem Stand der Technik bekannten Verfahren wirtschaftlich weiter verbessert ist.

Die zuvor genannte Aufgabe wird mit einem Verfahren gemäß den Merkmalen im Patentanspruch 1 gelöst. Vorteilhafte Ausführungsvarianten des erfindungsgemäßen Verfahrens sind Gegenstand der abhängigen Patentansprüche,

Das erfindungsgemäße Verfahren zur Herstellung eines Stabilisators mit einem Stabilisatorlager für Kraftfahrzeuge, wobei das Stabilisatorlager eine zweigeteilte Lagerstelle und eine Elastomerfeder aufweist, weist folgende Verfahrensschritte auf:
- Bereitstellen zweier ausvulkanisierter Elastomer-Metall-Lagerhalbschalen chemisches Vorbehandeln eines Stabilisatorlagerabschnittes auf dem Stabilisator durch Aufbringen eines Haftgrundes
- Einsetzen des Stabilisators und der Lagerhalbschalen in eine Fügevorrichtung
- Verkleben der Lagerhalbschalen mit dem Stabilisatorlagerabschnitt.

Als erfindungsgemäßer Vorteil ergibt sich, dass auf zwei ausvulkanisierte Elastomermetalllagerhalbschalen zurückgegriffen werden kann, die beispielsweise durch handelsübliche Bauteile bereitgestellt sind. Unter Elastomermetalllagerhalbschalen sind Lagerhalbschalen zu verstehen, die an der Außenseite eine aus einem metallischen Werkstoff bestehende Halblagerschelle aufweisen und hierin ein Elastomerfederverbund aufvulkanisiert sind. Dabei kann es sich um eine herkömmliche Elastomermasse handeln oder aber beispielsweise auch um eine gummiartige Elastomermasse.

Auf dem Stabilisator selber wird folgend ein Stabilisatorlagerabschnitt vorbehandelt. Der Stabilisatorlagerabschnitt ist ein Abschnitt in Längsrichtung des Stabilisators, der in seiner Längenabmessung im Wesentlichen der Längenabmessung des Stabilisatorlagers entspricht. Die Vorbehandlung des Stabilisatorlagerabschnitts wird chemisch durchgeführt. Hierbei wird ein Haftgrund aufgebracht. Bei dem Haftgrund handelt es sich um einen Primer oder aber um eine Haftgrundmasse, die eine bessere Verbindung der darauf folgenden Verklebung verursacht. Unter einer chemischen Vorbehandlung ist weiterhin eine Reinigung zu verstehen. Beispielsweise kann hier mit einem Reiniger, vorzugsweise einem alkohol- oder acethonhaltigen Reiniger, der Stabilisatorlagerabschnitt derart vorbehandelt werden, dass er keine chemischen, klebenden oder fettigen Oberflächensubstanzen mehr aufweiset. Hierdurch wird sichergestellt, dass die Klebeverbindung mit einer hohen Produktionssicherheit und Reproduzierbarkeit hergestellt wird. Die Vorbehandlung wird nachfolgend noch näher beschrieben, sie kann optional beispielsweise mechanisch oder aber auch physikalisch durchgeführt werden. Der Stabilisator und die Lagerhalbschalen werden folgend in einer Fügevorrichtung derart weiter bearbeitet, dass sie in der Fügevorrichtung verklebt werden. Unter der Fügevorrichtung ist im Rahmen der Erfindung beispielsweise eine Messlehre zu verstehen, die sicherstellt, dass die Elastomer-Metall-Lagerhalbschalen in Längsrichtung auf dem korrekten Längenabschnitt des Stabilisators zum Ansatz kommen. Unter einer Fügevorrichtung ist im Rahmen der Erfindung aber auch eine Maschine zu verstehen, in die die Lagerhalbschalen eingesetzt werden und anschließend der Stabilisator eingelegt wird und dann die Lagerhalbschalen mit dem Stabilisatorlagerabschnitt verklebt werden. Der Stabilisator selbst kann dabei ebenfalls in der Maschine gehalten werden oder aber durch einen Monteur in Position gehalten werden. Durch das erfindungsgemäße Verfahren mit seinen einzelnen Verfahrensschritten ist es möglich, in besonders einfacher und kosteneffizienter Weise an dem Stabilisator selber ein Stabilisatorlager anzubringen.

In einer weiteren bevorzugten Ausführungsvariante des erfindungsgemäßen Verfahrens wird der Stabilisatorlagerabschnitt mechanisch vorbehandelt. Dieses Vorbehandeln findet beispielsweise durch ein abrasives Bearbeiten statt. Unter einem abrasiven Bearbeiten ist im Rahmen der Erfindung ein Schleifen, ein Strahlen oder aber auch eine spanabhebende Bearbeitung zu verstehen. Insbesondere kommt ein Korundstrahlen, Sandstrahlen oder aber auch Eisstrahlen zum Einsatz. Zum einen werden Verunreinigungen von der Oberfläche entfernt, zum anderen wird die Oberfläche angeraut bzw. durch die Anrauung derart vergrößert, dass sich eine bessere Klebeverbindung herstellt. Zusätzlich kann durch die angeraute Oberfläche in Zusammenhang mit der Verklebung eine kraftschlüssige, stoffschlüssige und formschlüssige Verbindung hergestellt werden.

die Vorbehandlung des Stabilisatorlagerabschnitts chemisch durchgeführt. Hierbei wird vorzugsweise ein Haftgrund aufgebracht. Bei dem Haftgrund handelt es sich um einen Primer oder aber um eine Haftgrundmasse, die eine bessere Verbindung der darauf folgenden Verklebung verursacht. Unter einer chemischen Vorbehandlung ist weiterhin eine Reinigung zu verstehen. Beispielsweise kann hier mit einem Reiniger, vorzugsweise einem alkohol- oder acethonhaltigen Reiniger, der Stabilisatorlagerabschnitt derart vorbehandelt werden, dass er keine chemischen, klebenden oder fettigen Oberflächensubstanzen mehr aufweist. Hierdurch wird sichergestellt, dass die Klebeverbindung mit einer hohen Produktionssicherheit und Reproduzierbarkeit hergestellt wird.

In einer weiteren bevorzugten Ausführungsvariante werden die Lagerhalbschalen um den Stabilisatorlagerabschnitt in der Fügevorrichtung miteinander verpresst. Hierdurch wird eine formschlüssige Verbindung der Lagerschellen hergestellt, die sich wiederum besonders vorteilig auf die Reproduzierbarkeit und die Langlebigkeit des erfindungsgemäß hergestellten Stabilisatorlagers auswirkt. Insbesondere aufgrund der Produktionstoleranzen von Elastomeren bzw. gummiartigen Federwerkstoffen ist es durch das Verpressen auf kostenwirksame Art und Weise möglich, diese Produktionstoleranzen auszugleichen. Die Lagerschellen können im Rahmen der Erfindung zum Verpressen Profilierungen aufweisen, so dass ein schellenartiger Eingriff im Zuge einer Rastung oder aber einer Clipfunktion erfolgt. Weiterhin können die Lagerschellen auch in dem Verpressvorgang punktgeschweißt und anschließend verpresst werden.

Insbesondere stellt sich hierbei im Rahmen des erfindungsgemäßen Verfahrens eine Vorspannung der Elastomerfedern ein. Aufgrund der Vorspannung werden wiederum die Produktionstoleranzen von Elastomerwerkstoffen ausgeglichen sowie eine Verbesserung der Lagerungs- und Übertragungseigenschaften des erfindungsgemäßen Stabilisatorlagers hergestellt. Im Rahmen der Erfindung wird insbesondere eine Vorspannung von mehr als 10 % und besonders bevorzugt von mehr als 20 % hergestellt. Dies wirkt sich wiederum besonders vorteilig auf die Langlebigkeit aus, da ein Ausleiern des erfindungs hergestellten Stabilisatorlagers somit zunächst vermieden wird.

In einer weiteren bevorzugten Ausführungsvariante werden die Lagerhalbschalen mit dem Stabilisatorlagefabschnitt mit einem einkomponentigen Klebstoff verklebt. Hierdurch wird auf kostengünstige, einfache, produzierbare Art und Weise eine Koppelung von den Elastomer-Metall-Lagerhalbschalen und dem Stabilisator hergestellt. Im Rahmen der Erfindung kann der Klebstoff dabei im Vorhinein auf die Elastomer-Metall-Lagerhalbschale aufgetragen sein oder aber auf den Stabilisatorlagerabschnitt. Es können auch gleichzeitig Klebstoffmassen auf den Stabilisatorlagerabschnitt und die Elastomer-Metall-Lagerhalbschale aufgebracht sein. Der Klebstoff kann dabei in vollflächiger oder aber in punktueller Weise aufgetragen sein, so dass er sich beispielsweise beim Verkleben bzw. Verpressen vollflächig zwischen den beiden Bauteilen ausbreitet.

Weiterhin kann im Rahmen der Erfindung beispielsweise auch im Falle einer automatisierten Fügevorrichtung der Klebstoff vor bzw. während des Fügevorgangs aufgebracht werden. Hierbei ist es im Rahmen der Erfindung vorteilhaft, wenn der Klebstoff in einem Sprühverfahren oder aber einem Spritzverfahren aufgebracht wird. Durch den einkomponentigen Klebstoff entfällt bei dem erfindungsgemäßen Verfahren in Verbindung mit der chemischen oder aber mechanischen Vorbehandlung ein aufwendiges Vorfertigen eines zweikomponentigen Klebstoffs.

In einer weiteren bevorzugten Ausführungsvariante wird das Stabilisatorlager nach dem Verkleben zumindestens partiell wärmebehandelt. Durch diese partielle Wärmebehandlung wird sichergestellt, dass der Klebstoff beispielsweise noch einmal verflüssigt wird und somit besser Bereiche, die zuvor nicht ganz mit Klebstoff ausgefüllt waren, durch Nachfließen abdeckt,. Hierdurch erhöht sich die Qualität der erfindungsgemäß hergestellten Klebeverbindung. Durch einen temperaturaushärtenden Klebstoff ist es weiterhin durch die zumindest partielle Wärmenachbehandlung möglich, eine gezielte Aushärtung unter verfahrensökonomischen Herstellungsaspekten zu erreichen. Ebenfalls ist es möglich, den Klebstoff somit unter zeitlichen Aspekten schneller aushärten zu lassen, was wiederum die Taktzeiten bei der Herstellung der erfindungsgemäß hergestellten Stabilisatorlager verkürzt.

In einer weiteren besonders bevorzugten Ausführungsvariante des erfindungsgemäßen Verfahrens wird an dem Stabilisatorlagerabschnitt eine Profilierung hergestellt, so dass eine formschlüssige Verbindung zwischen einer Lagerhalbschale und dem Stabilisatorlagerabschnitt erzeugt wird. Unter einer Profilierung ist im Rahmen der Erfindung beispielsweise eine Ausnehmung, eine Öffnung oder aber auch ein Fortsatz in Form einer Nocke, einer Nase o. ä. zu verstehen. Die Profilierung füllt sich im Falle einer Ausnehmung mit dem Elastomermaterial bzw. mit dem Klebstoff, so dass durch einen zusätzlichen Formschluss die Qualität der hergestellten Koppelung erhöht wird. Im Fall eines Fortsatzes oder aber einer Nocke oder Nase drückt sich dieser in die Klebstoffschicht bzw. in das Elastomermaterial der Elastomer-Metall-Lagerhalbschale ein. Hierdurch wird ebenfalls über einen Formschluss und eine Oberflächenvergrößerung die hergestellte Verbindung in ihrer Qualität und Verbindungskraft erhöht.

Eine mögliche Ausführungsvariante im Rahmen der Erfindung ist beispielsweise das Auf- bzw. Einbringen einer Paßfeder in den Stabilisator im Bereich des Stabilisatorlagerabscfinitts.

Weitere Vorteile, Merkmale, Aspekte und Eigenschaften der vorliegenden Erfindung ergeben sich aus der folgenden Beschreibung. Diese dient dem einfachen Verständnis der Erfindung.

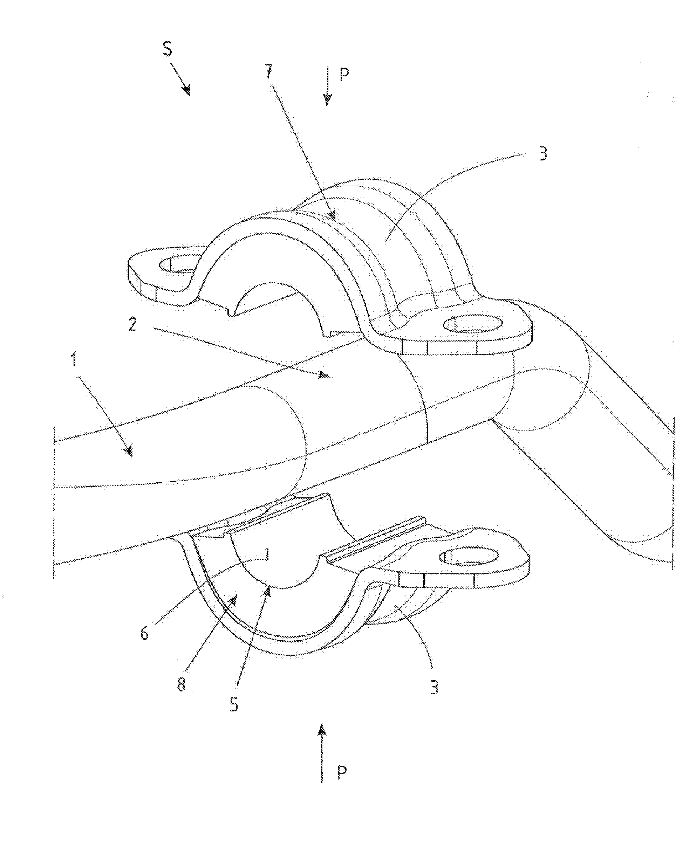

In der Figur ist ein erfindungsgemäßes Herstellungsverfahren zur Herstellung einer Stabilisatorlagerung an einem Stabilisator 1 gezeigt. Hierzu wird der Stabilisator 1 in einem Stabilisatorlagerabschnitt 2 zunächst vorbehandelt. Im Anschluss hieran werden Elastomer-Metall-Lagerhalbschalen 3 im Bereich des Stabilisatorlagerabschnitts 2 angeordnet und anschließend in Pfeilrichtung P auf den Stabilisatorlagerabschnitt 2 zubewegt und hier gekoppelt. Auf dem Elastomermaterial 4 ist in der hier gezeigten Figur in einer Lagerausnehmung 5 ein Klebstoff 6 aufgetragen. Die Elastomer-Metall-Lagerhalbschalen 3 sind aus je einer Lagerschelle 7 mit aufvulkanisierter Elastormerfeder 8 gebildet.

### Bezugszeichen:

- 1 -: Stabilisator
- 2-: Stabilisatorlagerabschnitt
- 3 -: Elastomer-Metall-Lagerhalbschale
- 4-: Elastomermaterial
- 5 -: Lagerausnehmung
- 6-: Klebstoff
- 7-: Lagerschelle
- 8 -: Elastomerfeder

- P -: Pfeilrichtung
- S -: Stabilisatorlager

## Patentansprüche

1. Verfahren zur Herstellung eines Stabilisators (1) mit einem Stabilisatorlager (S) für Kraftfahrzeuge, wobei das Stabilisatorlager (S) eine zweigeteilte Lagerschelle, (7) und eine Elastomerfeder (8) aufweist, **gekennzeichnet durch** folgende Verfahrensschritte:
- Bereitstellen zweier ausvulkanisierter Elastomer-Metall-Lagerhalbschalen (3)
- chemisches Vorbehandeln eines Stabilisatorlagerabschnittes (2) auf dem Stabilisator (1) **durch** Aufbringen eines Haftgrundes
- Einsetzen des Stabilisators (1) und der Lagerhalbschalen (3) in eine Fügevorrichtung
- Verkleben der Lagerhalbschalen (3) mit dem Stabilisatorlagerabschnitt (2).

2. Verfahren nach Anspruch 1, **dadurch gekennzeichnet, dass** das Vorbehandeln mechanisch durchgeführt wird, vorzugsweise durch abrasives Bearbeiten.

3. Verfahren nach einem der Ansprüche 1 bis 2, **dadurch gekennzeichnet, dass** die Lagerhalbschalen (3) um den Stabilisatorlagerabschnitt (2) in der Fügevorrichtung miteinander verpresst werden.

4. Verfahren nach einem der Ansprüche 1 bis 3, **dadurch gekennzeichnet, dass** die Elastomer-Metall-Lagerhalbschalen (3) durch das Fügen in der Fügevorrichtung mit einer Vorspannung beaufschlagt werden.

5. Verfahren nach einem der Ansprüche 1 bis 4, **dadurch gekennzeichnet, dass** die Lagerhalbschalen (3) mit dem Stabilisatorlagerabschnitt (2) mit einem einkomponentigen Klebstoff (6) verklebt werden.

6. Verfahren nach einem der Ansprüche 1 bis 5, **dadurch gekennzeichnet, dass** das Stabilisatorlager (S) nach dem Verkleben zumindest partiell wärmebehandelt wird.

7. Verfahren nach einem der Ansprüche 1 bis 6, **dadurch gekennzeichnet, dass** an dem Stabilisatorlagerabschnitt (2) eine Profilierung hergestellt wird, so dass eine formschlüssige Verbindung zwischen mindestens einer Lagerhalbschale (3) und dem Stabilisatorlagerabschnitt (2) erzeugt wird.

8. Verfahren nach Anspruch 7, **dadurch gekennzeichnet, dass** als Profilierung eine Passfeder in den Stabilisatorlagerabschnitt (2) eingesetzt wird.
